Europäisches Patentamt

European Patent Office

Office européen des brevets

(11) Publication number: **0 308 036**
**A2**

## EUROPEAN PATENT APPLICATION

(21) Application number: 88300528.2

(51) Int. Cl.4: **H01G 4/22 , H01B 3/22**

(22) Date of filing: 22.01.88

(30) Priority: 16.09.87 JP 231786/87

(43) Date of publication of application:
22.03.89 Bulletin 89/12

(84) Designated Contracting States:
**DE FR GB IT**

(71) Applicant: **KUREHA KAGAKU KOGYO
KABUSHIKI KAISHA
1-9-11, Nihonbashi, Horidome-cho
Chuo-ku Tokyo 103(JP)**

(72) Inventor: **Ito, Akira
16-1 Maehara Nishiki-machi
Iwaki-shi Fukushima-ken(JP)**
Inventor: **Ueno, Toshishige
48-7, Daimae Nishiki-machi
Iwaki-shi Fukushima-ken(JP)**
Inventor: **Kasami, Tadahito
16-1, Maehara Nishiki-machi
Iwaki-shi Fukushima-ken(JP)**

(74) Representative: **Woods, Geoffrey Corlett et al
J.A. KEMP & CO. 14 South Square Gray's Inn
London WC1R 5EU(GB)**

(54) Insulating oil.

(57) An insulating oil for capacitors is composed of from 60 to 80 vol% of 1-phenyl-2-tolylethane and from 40 to 20 vol% of 1,2-ditolylethane.

EP 0 308 036 A2

## INSULATING OIL

The present invention relates to insulating oils.

It has been desired that oil-impregnated capacitors have a high voltage-resistant characteristic in order to make their size compact and simultaneously their capacity large, to maintain good stability for a long time under a high voltage and to manufacture them at a low cost, by improving their energy density. This can be explained from the fact that the advance of insulating oils for capacitors has been promoted along with the history of improvement of an oil excellent in its voltage-resistant characteristic.

For instance, in JP-A-56-69708 (1981) and JP-A-56-69709 (1981), it is disclosed that the voltage-resistant characteristic of 1-phenyl-2-(isopropylphenyl)ethane is higher than those of the conventional mineral oils, alkylbenzenes and 1-phenyl-1-xylylethane and that it becomes possible to make capacitors in more compact size by using 1-phenyl-2-(isopropylphenyl)ethane or 1-phenyl-2-(ethylphenyl)ethane as an insulating oil.

The present inventors have disclosed in JP-A-60-61484 (1985) that 1-phenyl-2-tolylethane (hereinafter referred to as PTE) and 1,2-ditolylethane (hereinafter referred to as DTE) generate only a small amount of gases at a high temperature for a long time. Namely, they have a good affinity for oil-impregnated capacitors. During extensive studies on PTE and DTE, the present inventors have now found that the voltage-resistant characteristic of capacitors impregnated with the mixture of PTE and DTE at a specific blending ratio becomes remarkably higher than that of the capacitor impregnated with PTE or DTE, by itself.

The object of the present invention is to provide insulating oils which have excellent voltage-resistant characteristic.

Further, the object of the present invention is to provide insulating oils which improve an energy density of oil-impregnated capacitors, and accordingly, possibilize to design the size of the capacitor compact and its capacity large and further, to stabilize the capacitors for a long time under a high voltage.

Still more, the object of the present invention is to provide insulating oils prepared by mixing 60 to 80% by volume of PTE and 40 to 20% by volume of DTE,.

BRIEF EXPLANATION OF THE DRAWING:

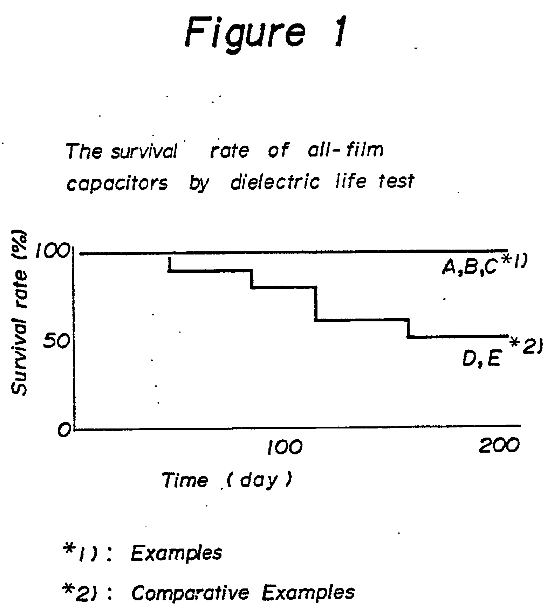

Figure 1 shows the time-dependency of dielectric life of the all-film capacitors impregnated with the insulating oils according to the present invention as Examples (A,B,C) comparing with the results of Comparative Examples (D,E).

The present invention is based on the novel finding that voltage-resistant characteristic of capapcitors impregnated with mixtures of PTE and DTE becomes remarkably higher than that of the capacitor impregnated with PTE or DTE, by itself. Accordingly, the insulating oils excellent in the voltage-resistant characteristic according to the present invention comprises a mixture of 60 to 80 vol% of PTE and 40 to 20 vol% of DTE.

Excellent voltage-resistant characteristic of the mixed oils of the present invention is realized from the facts such as the partial discharge inception voltage,the rated voltage and the energy density of the capacitor impregnated with the mixed oils and it is remarkably improved, as will be described later. Decision of the mixing ratio of PTE and DTE of the present invention is established from voltage-resistant characteristic,and the remarkable improvement of the voltage-resistant characteristic is only expected by the specific blending ratio of the present invention..

The improvement of voltage-resistant characteristic of oil-impregnated capacitor merely by mixing of two oils which have similar properties such as PTE and DTE is the novel fact which can not be expected from the physical and electric properties of each oil.

The mixed insulating oils according to the present invention will be explained more in detail in the following Example.

EXAMPLE:

The general properties of the insulating oils according to the present invention and those of the insulating oils used as comparisons are shown in Table 1.

Table 1

| General Properties of Insulating Oils | | | | | | |
|---|---|---|---|---|---|---|
| Example No. | PTE/DTE (volume ratio) | Code Number | Specific Gravity (15/4°C) | Flash Point (°C) | Pour Point (°C) | Dielectric Constant |
| Example 1 | 8/2 | A | 0.989 | 148 | -60 | 2.50 |
| Example 2 | 7/3 | B | 0.988 | 148 | -60 | 2.50 |
| Example 3 | 6/4 | C | 0.988 | 148 | -60 | 2.50 |
| Com. Ex. 1 | 10/0 | D | 0.989 | 148 | -55 | 2.52 |
| Com. Ex. 2 | 0/10 | E | 0.988 | 150 | -60 | 2.50 |
| Com. Ex. 3 | 9/1 | F | 0.988 | 150 | -55 | 2.51 |
| Com. Ex. 4 | 5/5 | G | 0.988 | 148 | -60 | 2.50 |

As are shown in Table 1, the physical and electric properties of the mixed oils of PTE and DTE in the range of 8/2 to 6/4 (by volume) scarcely show any difference from those of single PTE and DTE.

Then, dielectric characteristic of each all-film capacitors which was impregnated with each of the insulating oils shown in Table 1 were measured. The all-film capacitors used in the tests were wound two rough-surface polypropylene films of 15 μm in thickness . The static capacity of the prepared capacitors is about 2 μF.

Table 2

| Electric Properties of All-Film Capacitors | | | | | |
|---|---|---|---|---|---|
| Example No. | Code No. | Composite Dielectric Constant | Partial Discharge Inception Voltage (V/μm) | Rated Voltage (G) (V/μm) | Energy Density ($\epsilon G^2$) |
| Example 1 | A | 2.25 | 135 | 47 | 4970 |
| Example 2 | B | 2.25 | 135 | 47 | 4970 |
| Example 3 | C | 2.25 | 135 | 47 | 4970 |
| Com. Ex. 1 | D | 2.25 | 125 | 42 | 3969 |
| Com. Ex. 2 | E | 2.25 | 125 | 42 | 3969 |
| Com. Ex. 3 | F | 2.25 | 130 | 42 | 3969 |
| Com. Ex. 4 | G | 2.25 | 128 | 42 | 3969 |

As are shown in Table 2, the composite dielectric constants of all-film capacitors do not show any difference between the capacitor impregnated with PTE or DTE by itself and those impregnated with the mixed oils. On the other hand, the voltage-resistant properties of all-film capacitors impregnated with the mixed oils of the present invention shows a remarkable difference from those of impregnated with PTE or DTE by itself. Namely, the partial discharge inception voltage of all-film capacitors impregnated with the mixed oils according to the present invention is improved notably comparing with that of Comparative Examples. The higher partial discharge inception voltage improves the rated voltage, and moreover, the energy density of the all-film capacitors.

Increment of energy density of capacitor forced to decrease the volume of capacitor element, and save amounts of capacitor-forming materials, such as polypropylene film, alminum foil, etc. Namely, the present invention has dual effects of lowering the material cost, and increasing voltage-resistant characteristic..

In the present invention, a comparison of energy density of capacitors of Example and Comparative Example, that is, 4970/3969 = 1.25, indicate that the volume of capacitor elements of the present invention can be 25% smaller than that of the Comparative Example, since the volume fo the elements is inversely proportional to the energy density.

The time-dependency of dielectric life test on the all-film capacitors was carried out under loading a voltage of 1.8 times of the rated voltage on each group of ten all-film capacitors at 80°C. The results are shown in Figure 1. Since the rated voltage of all-film capacitor of the present invention is higher than that of the Comparative Example (refer to G value in Table 2), the test voltage of the Example is not same as that of the Comparative Example. Figure 1 represents the voltage resistant characteristic of all-film capacitors as their survival rates by dielectric breakdown .

In spite of applying a higher voltage on the all-film capacitors impregnated with the mixed oil according to the present invention than that on the capacitors of Comparative Examples, the all-film capacitors according to the present invention did not have dielectric breakdown until 200th day. On the other hand, among the all-film capacitors of Comparative Examples, there are some ones which have breakdown on 50th day and 50% of the tested all-film capacitors of Comparative Examples had breakdown by 150th day. These facts show that the voltage-resistant characteristic of the all-film capacitor according to the present invention has been remarkably improved compared with that of the all-film capacitors impregnated with single PTE or DTE and that this improvement is related to the improvement of the long-term stability of the capacitors.

As has been explained above, it has been confirmed that the mixed oils of PTE and DTE in the specific ratio have a high voltage-resistant characteristic which is impossible to expect from the physical and electric property of single PTE or DTE.

The present invention contributes much in technical improvements of capacitors together with savings of their production cost.

## Claims

1. An insulating oil composed of from 60 to 80% by volume of 1-phenyl-2-tolylethane and from 40 to 20% by volume of 1,2-ditolylethane.

2. An oil-impregnated capacitor, wherein the said oil is an insulating oil as defined in claim 1.

# Figure 1

The survival rate of all-film
capacitors by dielectric life test

*1) : Examples

*2) : Comparative Examples